# EUROPÄISCHE PATENTSCHRIFT

(11) **EP 1 524 087 B1**
(45) Veröffentlichungstag und Bekanntmachung des Hinweises auf die Patenterteilung: **24.05.2006**
(21) Anmeldenummer: 04015080.7
(22) Anmeldetag: 26.06.2004
(51) Int. Cl.: B26F 1/40, B29C 51/44, B26D 1/30

(54) **Arbeitsstation**
Workstation
Poste de travail

(30) Priorität: 15.10.2003 DE 10347775
(43) Veröffentlichungstag der Anmeldung: 20.04.2005
(73) Patentinhaber: UHLMANN PAC-SYSTEME GmbH & Co. KG, 88471 Laupheim (DE)
(72) Erfinder: Eck, Werner, Dr.-Ing., 88471 Laupheim (DE); Gertitschke, Detlev, Dipl.-Ing., 88471 Laupheim (DE); Rodi, Wolfgang, 88471 Baustetten (DE)
(74) Vertreter: Hentrich, Swen

(56) Entgegenhaltungen:
- DE-A- 3 118 529
- US-A- 5 964 134

## Beschreibung

Die Erfindung betrifft eine Arbeitsstation zum Bearbeiten einer vorzugsweise gefüllte Näpfe aufweisenden Folie durch Prägen, Perforieren, Stanzen oder vergleichbare Arbeitsschritte.

Bei derartigen aus der Praxis bekannten Arbeitsstationen, siehe z.B. DE-A-311 8529 oder US-5,964,134, wird die Folie getaktet transportiert, damit die Folie im Stillstand in der ortsfesten Arbeitsstation entsprechend dem gewünschten Arbeitsschritt bearbeitet werden kann. Diese getaktete Fortbewegung der Folie ist allerdings mit einer Leistungseinschränkung verbunden und bedeutet infolge der sich stetig abwechselnden Verzögerungen und Beschleunigungen eine höhere mechanische Belastung des in den Näpfen eingefüllten Produktes.

Der Erfindung liegt daher die Aufgabe zugrunde, eine Arbeitsstation der eingangs genannten Art so auszubilden, daß bei einer gesteigerten Leistungsfähigkeit eine schonendere Behandlung der Folie mit den gefüllten Näpfen erreicht wird.

Diese Aufgabe wird nach der Erfindung bei einer Arbeitsstation der eingangs genannten Art dadurch gelöst, daß einem Stationsgestell ein um eine horizontale Achse schwenkbarer Hebel zugeordnet ist, der gelenkig mit einer Arbeitsplattform verbunden ist, daß das Stationsgestell einen höhenverstellbaren Stempel mit einem Werkzeug aufweist, der die Arbeitsplattform durchgreift und mit dieser bewegbar ist, und daß dem Stationsgestell ein erster Antrieb für den Hebel und ein zweiter Antrieb für den Stempel zugeordnet ist.

Mit einer derartigen Arbeitsstation ist der Vorteil verbunden, daß ein kontinuierlicher Vorschub der Folie ermöglicht ist und so jedwede mechanische Belastung durch häufiges Abbremsen und erneutes Anfahren der Folie vermieden wird. Dies wird erreicht durch einen konstruktiven Aufbau, der eine Verstellung der Arbeitsplattform mit dem Stempel und dem Werkzeug ermöglicht, so daß trotz des kontinuierlichen Vorschubes der Folie die Arbeitsstation getaktet arbeitet, wobei zur Ausführung des gewünschten Arbeitsschrittes die Arbeitsstation synchron mit der Folie bewegt wird, um nachfolgend innerhalb des Taktes in die Ausgangsposition zurückzukehren, in der für den nächsten Takt die erneute Synchronisierung mit der Folie erfolgt.

Im Rahmen der Erfindung ganz besonders bevorzugt ist es, wenn durch den ersten Antrieb und den zweiten Antrieb jeweils Antriebsachsen drehend antreibbar sind, auf denen Exzenter zur Verstellung des Hebels bzw. des Stempels angeordnet sind. Durch diese Gestaltung wird eine hohe Flexibilität der Arbeitsstation erreicht, bei der allein durch Änderung der Arbeitsparameter für die Antriebe sowie deren relativen Phasenwahl zueinander eine Anpassung an unterschiedliche Formate und Transportgeschwindigkeiten der Folie möglich ist.

Im Rahmen der Erfindung ist weiterhin vorgesehen, daß dem Hebel eine parallel zur Schwenkachse orientierte Strebe zugeordnet ist, an der ein den Exzenter tragendes Koppelglied angreift. Zur Erhöhung der Stabilität ist der Hebel als Gabelhebel mit zwei Hebelzinken gestaltet. Weiterhin ist dem Hebel ein Passivhebel zugeordnet, der um eine parallel zur Schwenkachse liegende Achse drehbar ist und mit Abstand zum Hebel gelenkig mit der Arbeitsplattform verbunden ist, so daß die Arbeitsplattform eine Seite eines Parallelogramms darstellt, die durch den ersten Antrieb über den Hebel und Passivhebel parallel zur Folie verschoben werden kann. Eine weitere im Rahmen der Erfindung ganz besonders bevorzugte Ausführungsform ist dadurch gekennzeichnet, daß der Folie ein die Lage der Näpfe erfassender Sensor zugeordnet ist, der mit einer Regeleinheit verbunden ist, durch die in Abhängigkeit der Sensorsignale die Antriebe regelbar sind. Dadurch wird erreicht, daß eine automatische Korrektur der Werkzeuglage zur Durchführung des gewünschten Arbeitsschrittes sichergestellt ist, ohne dazu auf den Vorschub der Folie einwirken zu müssen.

Der schnelleren Ausführung des gewünschten Arbeitsschrittes bei geringer Belastung der Folie dient weiterhin, daß die Arbeitsplattform ein Gegenlager für das Werkzeug trägt.

Im folgenden wird die Erfindung in einem in der Zeichnung dargestellten Ausführungsbeispiel näher erläutert; es zeigen:

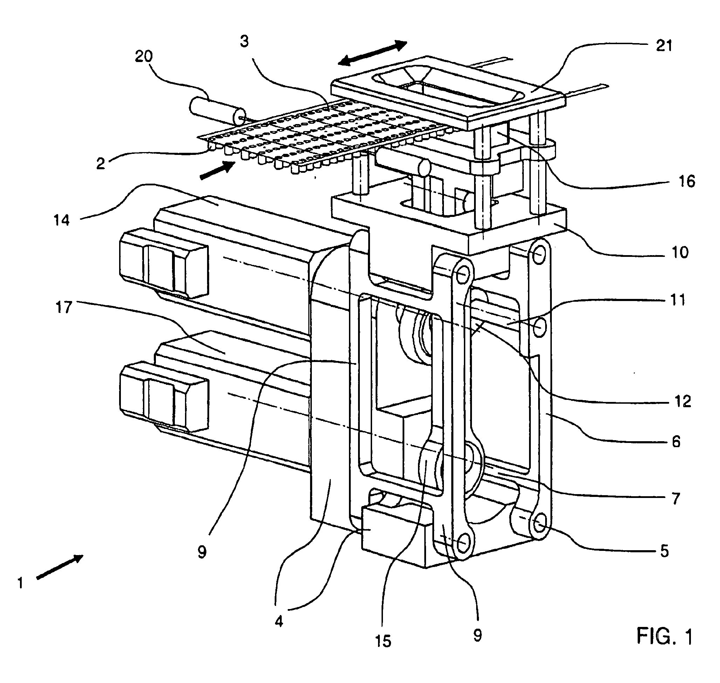

- Fig. 1: eine perspektivische Darstellung der erfindungsgemäßen Arbeitsstation mit der zwischen der Arbeitsplattform und dem Gegenlager durchgeführten Folie,

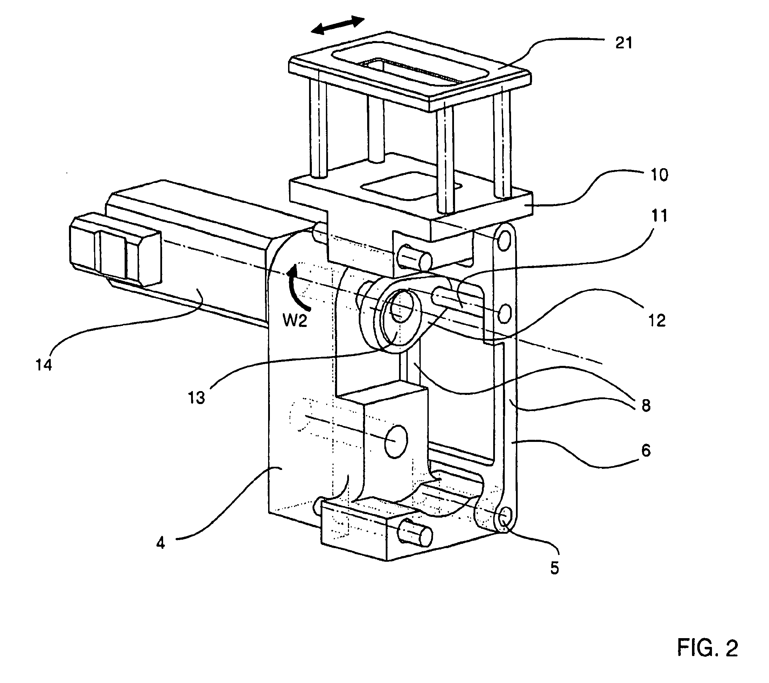

- Fig. 2: eine der Figur 1 entsprechende Darstellung mit deutlicher Hervorhebung der für die Bewegung der Arbeitsplattform erforderlichen Bauteile durch Weglassen der der Verstellung des Stempels dienenden Bauteile,

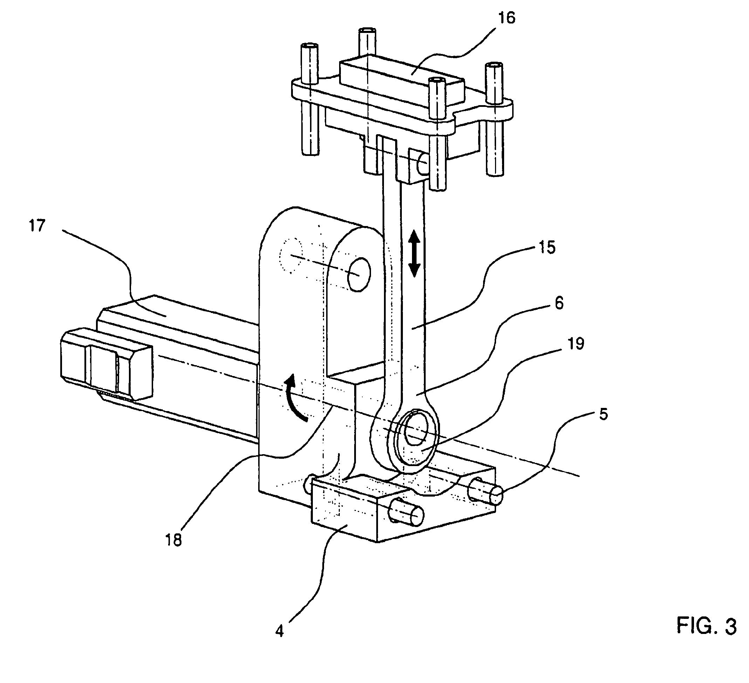

- Fig. 3: eine der Figur 1 entsprechende Darstellung mit deutlicher Hervorhebung der für die Verstellung des Stempels erforderlichen Bauteile durch Weglassen der bereits in Figur 2 gezeigten Bauteile,

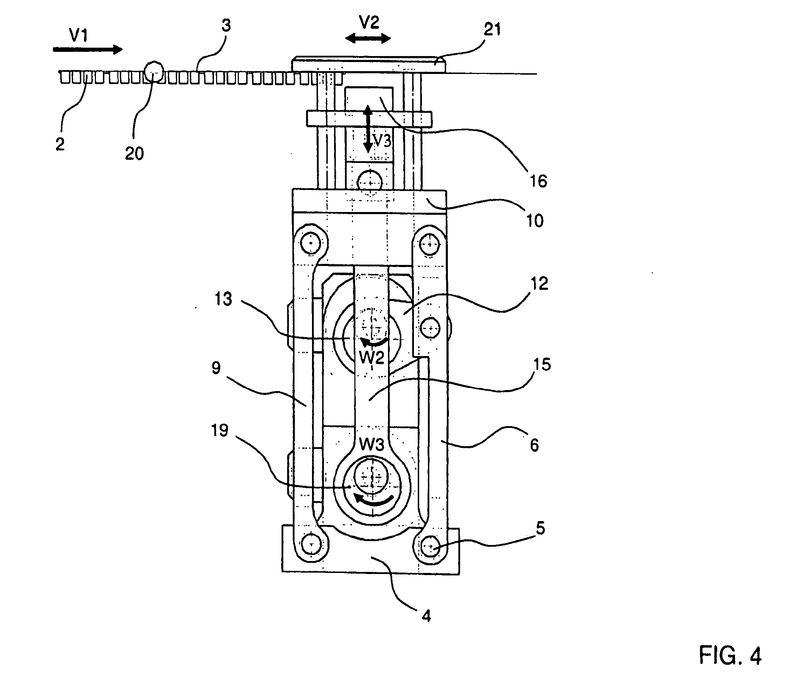

- Fig. 4: eine Seitenansicht der erfindungsgemäßen Arbeitsstation aus Figur 1,
- Fig. 5 bis Fig. 9: eine der Figur 4 entsprechende Darstellung einer Arbeitsstation in verschiedenen Phasen eines Arbeitstaktes.

In der Zeichnung ist eine Arbeitsstation 1 dargestellt, die dazu dient, eine kontinuierlich bewegte, mit Produkten gefüllte Näpfe 2 aufweisende Folie 3 einzelnen Arbeitsschritten unterwerfen zu können, wobei das in der Zeichnung dargestellte Ausführungsbeispiel dem Stanzen eines Blisters aus der Folie 3 dient. Die Arbeitsstation 1 weist ein Stationsgestell 4 auf, dem ein um eine horizontale Achse 5 schwenkbarer Hebel 6 zugeordnet ist, wobei der Hebel 6 als Gabelhebel 7 mit zwei Hebelzinken 8 gestaltet und dem Hebel weiterhin ein Passivhebel 9 zugeordnet ist, die gemeinsam eine gelenkig angeschlossene Arbeitsplattform 10 tragen. Zwischen den beiden Hebelzinken 8 ist eine parallel zur Achse 5 orientierte Strebe 11 placiert, an der ein Koppelglied 12 gelagert ist, das einen Exzenter 13 trägt, der zur Verstellung des Hebels 6 mittels eines ersten Antriebes 14 genutzt wird.

Das Stationsgestell 4 weist weiterhin einen höhenverstellbaren Stempel 15 mit einem Werkzeug 16 auf, der die Arbeitsplattform 10 durchgreift und mit dieser bewegbar ist, wobei für den Stempel 15 ein zweiter Antrieb 17 vorgesehen ist, der eine Antriebsachse 18 drehend antreibt, auf denen ein zweiter Exzenter 19 zur Verstellung des Stempels 15 sitzt.

In Laufrichtung vor der Arbeitsstation 1, also stromauf, ist der Folie 3 eine die Lage der Näpfe 2 erfassender Sensor 20 zugeordnet, der mit einer Regeleinheit verbunden ist, durch die in Abhängigkeit der Sensorsignale die Antriebe 14,17 geregelt werden.

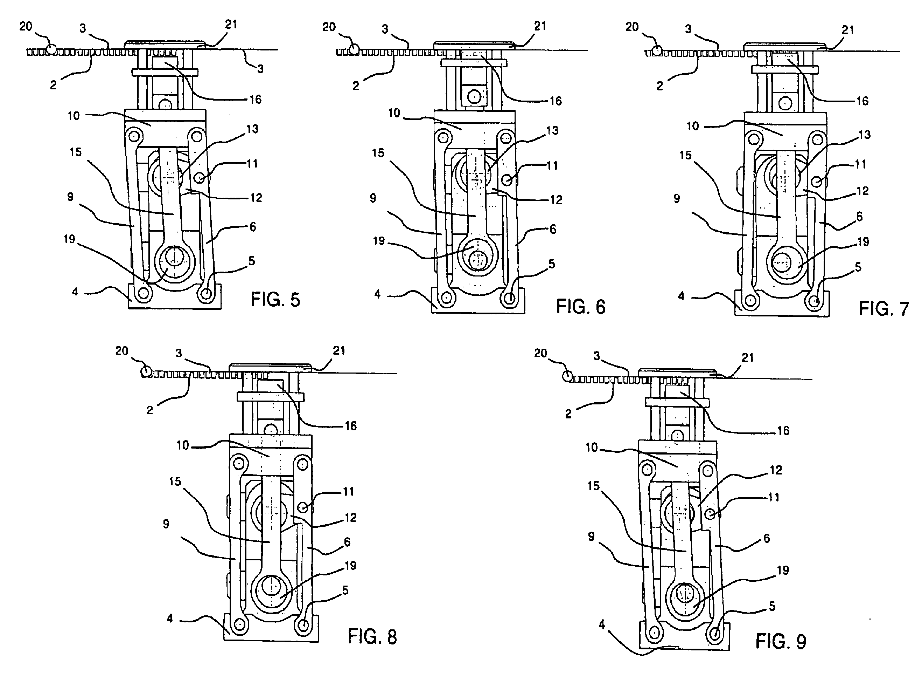

Unter Bezugnahme auf die Figuren 5 bis 9 wird nachfolgend die Funktionsweise der erfindungsgemäßen Arbeitsstation 1 beschrieben. Die Folie 3 wird an dem Sensor 20 vorbei kontinuierlich durch die Arbeitsstation 1 geführt und zwar zwischen der Arbeitsplattform 10 und einem auf der Arbeitsplattform 10 angeordneten Gegenlager 21. Der erste Antrieb 14 verstellt dabei über den Exzenter 13 den Hebel 6 um die im Stationsgestell 4 angeordnete Achse 5, um so eine parallel zur Folie 3 erfolgende Verschiebung der Arbeitsplattform 10 zu erzielen, wobei über einen Bruchteil des Taktes die Verschiebung nicht nur parallel, sondern auch synchron zur Folie 3 erfolgt, um während dieser Phase des Taktes mittels des zweiten Antriebes 17 den Stempel 15 vertikal zu verstellen und den gewünschten Arbeitsschritt auszuführen, nämlich im gezeigten Ausführungsbeispiel durch Pressen des Werkzeuges 16 gegen das Gegenlager 21 einen Blister aus der Folie 3 auszustanzen. Während der Abwärtsbewegung des Stempels 15 kehrt die Arbeitsplattform 10 durch die geeignete Drehung des Exzenters 13 wieder in ihre Ausgangslage zurück. Zu beachten ist dabei, daß eine automatische Lagekorrektur der Werkzeuge 16 in Laufrichtung der Folie 3 erfolgt über die geeignete Ansteuerung des ersten Antriebes 14 und des zweiten Antriebes 17 in Abhängigkeit der von dem Sensor 20 erfaßten Daten zur Lage der Näpfe 2 in der Folie 3.

## Patentansprüche

1. Arbeitsstation zum Bearbeiten einer vorzugsweise gefüllte Näpfe (2) aufweisenden Folie (3) durch Prägen, Perforieren, Stanzen oder vergleichbare Arbeitsschritte, **dadurch gekennzeichnet, daß** einem Stationsgestell (4) ein um eine horizontale Achse (5) schwenkbarer Hebel (6) zugeordnet ist, der gelenkig mit einer Arbeitsplattform (10) verbunden ist, daß das Stationsgestell (4) einen höhenverstellbaren Stempel (15) mit einem Werkzeug (16) aufweist, der die Arbeitsplattform (10) durchgreift und mit dieser bewegbar ist, und daß dem Stationsgestell (4) ein erster Antrieb (14) für den Hebel (6) und ein zweiter Antrieb (17) für den Stempel (15) zugeordnet ist.

2. Arbeitsstation nach Anspruch 1, **dadurch gekennzeichnet, daß** durch den ersten Antrieb (14) und den zweiten Antrieb (17) jeweils Antriebsachsen (18) drehend antreibbar sind, auf denen Exzenter (13,19) zur Verstellung des Hebels (6) bzw des Stempels (15) angeordnet sind.

3. Arbeitsstation nach Anspruch 2, **dadurch gekennzeichnet, daß** dem Hebel (6) eine parallel zur Achse (5) orientierte Strebe (11) zugeordnet ist, an der ein den Exzenter (13) tragendes Koppelglied (12) angreift.

4. Arbeitsstation nach Anspruch 3, **dadurch gekennzeichnet, daß** der Hebel (6) als Gabelhebel (7) mit zwei Hebelzinken (8) gestaltet ist.

5. Arbeitsstation nach einem der Ansprüche 1 bis 4, **dadurch gekennzeichnet, daß** dem Hebel (6) ein Passivhebel (9) zugeordnet ist, der um eine parallel zur Achse (5) liegende Achse drehbar ist und mit Abstand zum Hebel (6) gelenkig mit der Arbeitsplattform (10) verbunden ist.

6. Arbeitsstation nach einem der Ansprüche 2 bis 5, **dadurch gekennzeichnet, daß** der Folie (3) ein die Lage der Näpfe (2) erfassender Sensor (20) zugeordnet ist, der mit einer Regeleinheit verbunden ist, durch die in Abhängigkeit der Sensorsignale die Antriebe (14,17) regelbar sind.

7. Arbeitsstation nach einem der Ansprüche 1 bis 6, **dadurch gekennzeichnet, daß** die Arbeitsplattform (10) ein Gegenlager (21) für das Werkzeug trägt.

## Claims

1. Workstation for processing a foil (3), containing preferably filled cups (2), by embossing, perforating, punching or comparable work steps, **characterized in that** there is allocated to a station frame (4) a lever (6), swivellable about a horizontal axis (5), which is articulated to a work platform (10), **in that** the station frame (4) has a vertically adjustable punch (15) with a tool (16) which reaches through the work platform (10) and is movable therewith, and **in that** a first drive (14) for the lever (6) and a second drive (17) for the punch (15) are allocated to the station frame (4).

2. Workstation according to claim 1, **characterized in that** respective drive axles (18) are drivable in rotation by the first drive (14) and the second drive (17), on which axles eccentrics (13, 19) are arranged to adjust the lever (6) or the punch (15).

3. Workstation according to claim 2, **characterized in that** there is allocated to the lever (6) a strut (11), oriented parallel to the axis (5), to which a coupling member (12) carrying the eccentric (13) engages.

4. Work station according to claim 3, **characterized in that** the lever (6) is designed as a steering fork (7) with two lever prongs (8).

5. Workstation according to one of claims 1 to 4, **characterized in that** allocated to the lever (6) is a passive lever (9) which is rotatable about an axis lying parallel to the axis (5) and is articulated to the work platform (10) at a distance from the lever (6).

6. Workstation according to one of claims 2 to 5, **characterized in that** the foil (3) has allocated to it a sensor (20), recording the position of the cups (2), which is connected to a control unit by which the drives (14, 17) can be adjusted according to the sensor signals.

7. Workstation according to one of claims 1 to 6, **characterized in that** the work platform (10) carries a thrust bearing (21) for the tool.

## Revendications

1. Poste de travail pour traiter une feuille (3), comportant de préférence des creux (2) remplis, par estampage, perforation, découpage ou des étapes opératoires similaires, **caractérisé en ce qu'**un levier (6) pivotant autour d'un axe (5) horizontal est associé à un bâti de poste (4) et est articulé sur un plateau de travail (10), **en ce que** le bâti de poste (4) présente un poinçon (15) déplaçable en hauteur qui porte un outil (16), traverse le plateau de travail (10) et peut être déplacé avec celui-ci, et **en ce qu'**il est associé au bâti de poste (4) un premier moyen d'entraînement (14) pour le levier (6) et un deuxième moyen d'entraînement (17) pour le poinçon (15).

2. Poste de travail selon la revendication 1, **caractérisé en ce que** le premier moyen d'entraînement (14) et le deuxième moyen d'entraînement (17) permettent chacun d'entraîner en rotation des axes moteurs (18) sur lesquels sont montés des excentriques (13, 19) destinés à déplacer respectivement le levier (6) et le poinçon (15).

3. Poste de travail selon la revendication 2, **caractérisé en ce qu'**il est associé au levier (6) une traverse (11) qui est disposée parallèlement à l'axe (5) et sur laquelle est en prise un élément d'accouplement (12) portant l'excentrique (13).

4. Poste de travail selon la revendication 3, **caractérisé en ce que** le levier (6) est réalisé sous forme de levier à fourche (7) comportant deux branches (8).

5. Poste de travail selon une des revendications 1 à 4, **caractérisé en ce qu'**il est associé au levier (6) un levier passif (9) qui peut tourner autour d'un axe parallèle à l'axe (5) et est articulé sur le plateau de travail (10), à distance du levier (6).

6. Poste de travail selon une des revendications 2 à 5, **caractérisé en ce qu'**il est associé à la feuille (3) un détecteur (20) qui détecte la position des creux (2) et est connecté à une unité de régulation permettant de réguler les moyens d'entraînement (14, 17) en fonction des signaux du détecteur.

7. Poste de travail selon une des revendications 1 à 6, **caractérisé en ce que** le plateau de travail (10) porte une butée (21) pour l'outil.
